**Europäisches Patentamt**

**European Patent Office**

**Office européen des brevets**

(11) Veröffentlichungsnummer: **0 205 938**
**A1**

# (12) EUROPÄISCHE PATENTANMELDUNG

(21) Anmeldenummer: **86106988.8**

(22) Anmeldetag: **22.05.86**

(51) Int. Cl.⁴: **B 60 T 13/14**

(30) Priorität: **19.06.85 DE 3521875**

(43) Veröffentlichungstag der Anmeldung: **30.12.86**
**Patentblatt 86/52**

(84) Benannte Vertragsstaaten: **FR GB IT**

(71) Anmelder: **ALFRED TEVES GmbH,**
**Guerickestrasse 7 Postfach 119 155, D-6000 Frankfurt am Main (DE)**

(72) Erfinder: **Kahrs, Manfred, Dr., Auf der Ahl 93,**
**D-6200 Wiesbaden (DE)**
Erfinder: **Kunze, Lothar, Sportplatz 4,**
**D-6238 Hofheim-Langenhain (DE)**

(74) Vertreter: **Grau, Ulf, c/o ALFRED TEVES GMBH**
**Guerickestrasse7, D-6000 Frankfurt (M) 90 (DE)**

(54) Bremskraftregelventil für hydraulische Fremdkraft-Bremsanlagen, insbesondere für Kraftfahrzeuge und selbstfahrende Arbeitsmaschinen.

㉑ Es wird ein Bremsregelventil (1) für hydraulische Fremdkraft-Bremsanlagen, insbesondere für Kraftfahrzeuge und selbstfahrende Arbeitsmaschinen, mit einem Ventilgehäuse (2) mit einem Druckmittelanschluß (18), der mit einer Fremdkraft-Druckmittelquelle (20) verbindbar ist, zumindest einem Anschluß (21), der mit einer Radbremse verbindbar ist, einem mit einem drucklosen Behälter verbindbaren Anschluß und mit einem in einer Bohrung des Ventilgehäuses (2) axial verschiebbar angeordneten Ventilschieber (5), welcher einen Durchgang (27) aufweist, um den Druckmittelanschluß (18) mit dem zur Radbremse führenden Anschluß (21) zu verbinden, beschrieben, welches einen vergrößerten Betätigungsweg gegenüber solchen in Schieberbauform aufweist. Dies wird dadurch erreicht, daß im Ventilgehäuse (2) ein axial verschiebbares Element (13) angeordnet ist, das einerseits von der Kraft einer Feder (17) und andererseits vom Bremsdruck beaufschlagbar ist, und daß das axial verschiebbare Element (13) zumindest einen Durchgang (24, 25, 26) aufweist, mittels der die Anschlüsse (18, 21, 22) mit dem Ventildurchgang (27) verbindbar sind.

Beschreibung:

Die Erfindung betrifft ein Bremsregelventil für hydraulische Framdkraft-Bremsanlagen, insbesondere für Kraftfahrzeuge und selbstfahrende Arbeitsmaschinen, mit einem Ventilgehäuse mit einem Druckmittelanschluß, der mit einer Fremdkraft-Druckmittelquelle verbindbar ist, zumindest einem Anschluß, der mit einer Radbremse verbindbar ist, einem mit einem drucklosen Behälter verbindbaren Anschluß und mit einem in einer Bohrung des Ventilgehäuses axial verschiebbar angeordneten Ventilschieber, welcher einen Durchgang aufweist, um den Druckmittelanschluß mit dem zur Radbremse führenden Anschluß zu verbinden.

Bremsregelventile dieser Art sind auch als sogenannte Fremdkraftbremsventile bekannt. Es handelt sich dabei um Druckregelventile, mit denen durch Betätigung des Fahrers ein der Betätigungskraft proportionaler Druck in die Radbremsen einsteuerbar ist. Derartige Ventile werden beispielsweise für die Betriebsbremsen von Schwerfahrzeugen wie Baumaschinen, Traktoren, Kettenfahrzeugen etc. verwendet. Dabei wird insbesondere eine Schieberbauform bevorzugt, weil diese kostengünstig herstellbar ist. Ein Nachteil dieser Bauform ist der sehr kleine Betätigungsweg, der sich mit nur Bruchteilen eines Millimeters infolge des Regelvorganges der Steuerkante des Ventilschiebers am Druckmittelanschluß ergibt. Um einen größeren Betätigungsweg (Pedalweg) und damit Pedalgefühl und Dosierbarkeit zu erzeugen, sind bereits Lösungen bekannt, bei denen derartige Ventile mit einer dem Ventilschieber vorgeschalteten Feder ausgestattet sind. Nachteile dieser Anordnung sind die Möglichkeiten von Überbremsungen aufgrund der Nachgiebigkeit der Feder und von Bremsdruckschwingungen aufgrund der Schwingungsfähigkeit des Systems Feder-Drucköl säule.

Der Erfindung liegt daher die Aufgabe zugrunde, ein Bremsregelventil der eingangs genannten Art zu schaffen, welches einen vergrößerten Betätigungsweg aufweist und ohne vorgeschaltete Federn auskommt.

Diese Aufgabe wird erfindungsgemäß dadurch gelöst, daß im Ventilgehäuse ein axial verschiebbares Element angeordnet ist, das einerseits von der Kraft einer Feder und andererseits vom Bremsdruck beaufschlagbar ist, und daß das axial verschiebbare Element zumindest je einen Durchgang aufweist, mittels der die Anschlüsse mit dem Ventildurchgang verbindbar sind. Damit wird auf einfache Weise ein Bremsregelventil mit einem druckabhängigen, beliebig dimensionierbaren Betätigungsweg geschaffen. Die Betätigungskraft ist ebenfalls dem Bremsdruck proportional. Da dem Ventilschieber eine Feder nicht vorgeschaltet ist, ergibt sich beim Bremsen ein direktes Gefühl und keine Gefahr des Überdosierens mehr und die Schwingungsneigung des Systems ist ausgeschaltet.

Der Grundgedanke der Erfindung ist dabei, daß die bisher fest im Gehäuse angeordneten Steuerkanten der Anschlüsse sich nunmehr am axialbeweglichen Element befinden. Dieses ist gemäß einer bevorzugten Ausgestaltung der Erfindung eine den Ventilschieber umgebende Hülse.

Die Hülse kann vorteilhafterweise einen Flanschabschnitt aufweisen, der in einem vergrößerten Abschnitt der Ventilbohrung angeordnet ist und der einerseits gegen einen am Ventilgehäuse vorgesehenen Anschlag anlegbar ist und andererseits zur Abstützung der Feder dient.

Um den Bremsdruck auf einfache Weise einer Stirnseite der Hülse zuführen zu können, weist der Ventilschieber erfindungsgemäß einen mit dem Durchgang in Verbindung stehenden Kanal auf, der zu einem von der Stirnfläche der Hülse begrenzten Druckraum führt.

Zur Führung des Ventilschiebers an seinem dem Bremspedal abgewandten Ende ist gemäß einer weiteren Ausführungsform der Erfindung in einem einen Verschluß bildenden Stopfen eine entsprechende Führungsbohrung gebildet.

Da bei den bekannten Fremdkraftbremsventile in Schieberbauform die Gefahr einer Leckage besteht, die auch in unbetätigtem Zustand über die Schieberspalte vom Druckanschluß zum mit dem drucklosen Behälter verbundenen Anschluß abströmt, ist bei der vorliegenden Erfindung vorgesehen, daß zwischen der Fremdkraft-Druckmittelquelle und dem Druckmittelanschluß ein mechanisch entsperrbares Rückschlagventil angeordnet ist. Die erwähnte, bei anstehendem Pumpen- oder Speicherdruck ständig durch die Schieberspalte abfließende Leckage und der daraus resultierende Energieverlust wird durch das zusätzlich vorgesehene Rückschlagventil verhindert. Dieses sperrt in unbetätigter Schaltstellung die Druckleitung von der Pumpe bzw. dem Speicher ab. Bei der Betätigung des erfindungsgemäßen Bremsregelventils wird es mit beginnendem Schieberweg (Totweg, um
den drucklos zum Behälter führenden Anschluß zu verschließen)
insbesondere durch mechanische Mittel geöffnet und gibt damit
den Drucköflfluß frei. Die mechanische Betätigung des Rückschlagventils durch den Ventilschieber kann dabei mittels Nut
und Rampen, Kugel und Stift ausgeführt werden.

Weitere vorteilhafte Ausführungsformen sehen vor, daß die
Hülse einseitig verschlossen ist, wobei insbesondere die Hülse
einen Ringraum begrenzt, der einen immer offenen, zu einem
drucklosen Behälter führenden Anschluß aufweist. Zweckmäßig
kann dabei ein separater Federteller vorgesehen sein, der an
der Stirnseite der Hülse anliegt und an den sich die Feder abstützt.

Das erfindungsgemäß vorgesehene Grundprinzip ist durch entsprechende Abwandlung auch bei einer Zweikreisanlage einsetzbar. Zweckmäßig sind dabei zwei Ventilschieber in einer gemeinsamen, entsprechend verlängerten Hülse mit duplizierter
Anzahl von Steuerkanten angeordnet.

Die Erfindung wird nachfolgend anhand von Ausführungsbeispieln
näher erläutert, die in der Zeichnung dargestellt sind.

Es zeigen:

Fig. 1     einen Längsschnitt durch eine erste Ausführungsform
           eines Bremsregelventils für eine einkreisige Bremsanlage,

Fig. 2     einen Längsschnitt durch eine zweite Ausführungsform
           eines Bremsregelventils für eine einkreisige Brems-
           anlage, und

Fig. 3    einen Längsschnitt durch ein Bremsregelventil für
         eine Zweikreis-Bremsanlage.

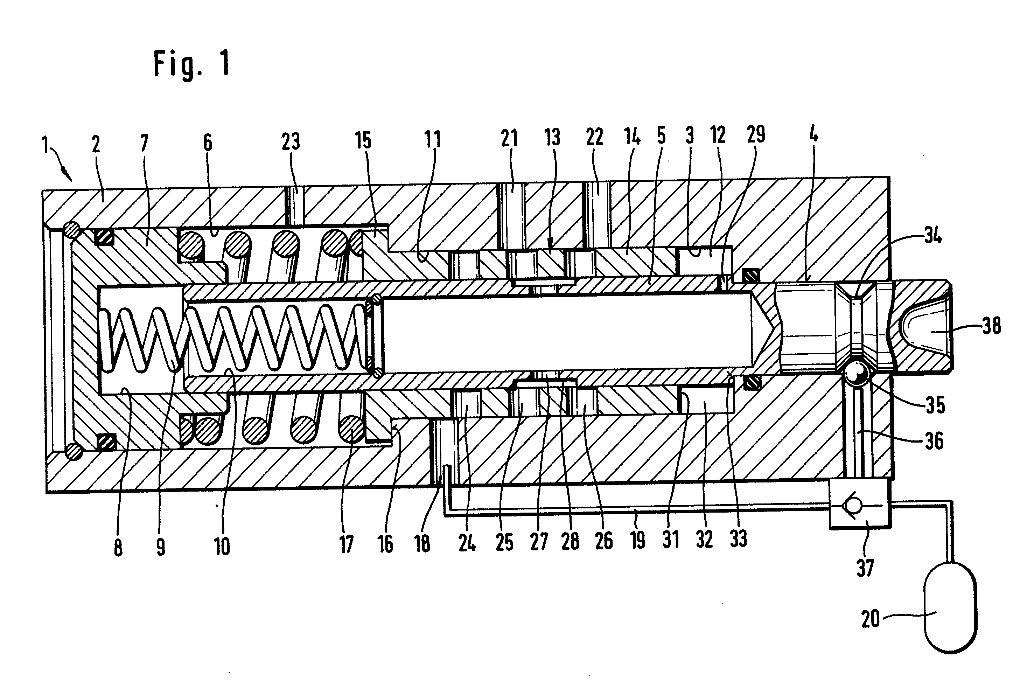

In Figur 1 ist ein Bremsregelventil 1 mit einem Ventilgehäuse
2 gezeigt, welches mit einer zweifach abgestuften Ventilbohrung 3 versehen ist. Im Abschnitt 4 der Ventilbohrung 3, der
den geringsten Durchmesser aufweist, ist ein Ventilschieber 5
axial verschiebbar gelagert. Das entgegengesetzte Ende des
Ventilschiebers 5 ist in einem den Abschnitt 6 der Ventilbohrung 3 stirnseitig dicht verschließenden Stopfen 7 geführt,
der dazu eine entsprechende Führungsbohrung 8 aufweist. Am
Boden des Stopfens 7 ist eine Feder 9 abgestützt, deren anderes Ende in einer zentralen Bohrung 10 des Ventilschiebers 5
angeordnet und am Schieber abgestützt ist.

In einem zwischen dem Ventilschieber 5 und dem mittleren Abschnitt 11 der Ventilbohrung 3 gebildeten Ringraum 12 ist eine
Hülse 13 angeordnet. Die Hülse 13 sitzt axial verschiebbar auf
dem Ventilschieber 5. Sie weist einen rohrförmigen Abschnitt
14 und einen Flanschabschnitt 15 auf. Der Flanschabschnitt 15
der Hülse 13 liegt im dargestellten Ausgangszustand des Bremsregelventils 1 an einer zwischen dem Abschnitt 6 und dem
Abschnitt 11 der Ventilbohrung 3 gebildeten Stufe 16 an. Auf
der gegenüberliegenden Seite des Flanschabschnittes 15 liegt
eine Schraubenfeder 17 an, deren anderes Ende am Stopfen 7
abgestützt ist. Die Hülse 13 wird dadurch in der Lösestellung
von der Feder 17 am Anschlag gehalten.

Im Ventilgehäuse 2 ist ein Druckmittelanschluß 18 vorgesehen,
der über eine Leitung 19 mit einer Fremdkraft-Druckmittelquelle 20 (Pumpe, Speicher) in Verbindung steht. Versetzt
gegenüberliegend ist im Ventilgehäuse 2 ein weiterer Anschluß
21 vorgesehen, der, über eine entsprechende (nicht dargestellte) Leitung mit einer (gleichfalls nicht dargestellten) Radbremse verbindbar ist. Ferner sind im Ventilgehäuse 2 zu einem drucklosen Behälter führende Anschlüsse 22 und 23 vorgesehen, wobei der Anschluß 22 in den Ringraum 12 und der Anschluß 23 in einen der Hülse 13 vorgelagerten, vom Abschnitt 6 begrenzten Raum mündet. Die Hülse 13 weist drei Paare einander gegenüberliegender radialer Bohrungen 24, 25 und 26 auf. Der Ventilschieber 5 ist mit einem Paar gegenüberliegender Bohrungen 27 versehen, die von einer Steuerkanten bildenden Ringnut 28 umgeben sind. Eine weitere radiale Bohrung 29 ist im hinteren Bereich des Ventilschiebers 5 vorgesehen. Diese Bohrung 29 verbindet die zentrale Bohrung 10 des Ventilschiebers 5 mit einem vom Ringraum 12 gebildeten und von der Stirnfläche 31 der Hülse 13 begrenzten Druckraum 32. In diesem Bereich bildet der Ventilschieber 5 eine Stufe 33, mit der er im Lösezustand gegen eine entsprechende, im Ventilgehäuse 2 gebildete Stufe anliegt.

Der im Bohrungsabschnitt 4 gedichtet geführte Abschnitt des Ventilschiebers 5 ist mit einer Rampen bildenden Ringnut 34 versehen. In dieser Ringnut 34 ist eine Kugel 35 angeordnet, die über einen Stift 36 auf ein mechanisch entsperrbares Rückschlagventil 37 einwirkt, welches in der von der Druckmittelquelle 20 zum Druckmittelanschluß 18 führenden Leitung 19 angeordnet ist. An der Stirnseite dieses Abschnittes des Ventilschiebers 5 ist auch eine Ausnehmung 38 ausgebildet, in der eine (nicht dargestellte) Druckstange zur Verbindung des Ventilschiebers 5 mit einem Bremspedal eingreifen kann.

Nachfolgend ist die Arbeitsweise des Bremsregelventils 1 ausgehend von der in der Zeichnung dargestellten Lösestellung beschrieben:

In dieser Löse- oder Ausgangsstellung ist der Anschluß 21 über die Bohrung 25, die Ringnut 28 und die Bohrung 27 mit dem zum drucklosen Behälter führenden Anschluß 22 in Verbindung, so daß die Radbremse drucklos ist. Die von der Druckmittelquelle 20 zum Druckmittelanschluß 18 führende Leitung 19 ist durch das Rückschlagventil 37 verschlossen. Bei einer Betätigung des Bremsregelventils wird der Ventilschieber 5 (in der Zeichnung nach links) verschoben, wobei zunächst die über den Anschluß 22 zum drucklosen Behälter führende Verbindung unterbrochen wird. Bei diesem Bewegungsweg wird auch mittels der Kugel-Rampen-Einrichtung das Rückschlagventil 37 geöffnet, so daß der Versorgungsdruck am Druckmittelanschluß 18 ansteht. Bei einer weiteren Verschiebung des Ventilschiebers 5 entgegen der Kraft der Feder 9 gelangt die von der Ringnut 28 gebildete Steuerkante in den Bereich der Bohrungen 24, wodurch der Anschluß 18 über die Bohrungen 24 in der Hülse 13, die Ringnut 28 und die Bohrungen 27 des Ventilschiebers mit den Bohrungen 25 und damit dem zu den Radbremsen führenden Anschluß 21 verbunden wird. Der so eingesteuerte Druck steht über die Bohrung 29 auch im Druckraum 32 an und beaufschlagt damit die Stirnfläche 31 der Hülse, die dadurch, entgegen der Kraft der Feder 17 ein entsprechendes Stück proportional dem Bremsdruck verschoben wird. Dadurch ergibt sich ein druckabhängiger Betätigungsweg. Auch die Betätigungskraft ist dem Bremsdruck proportional.

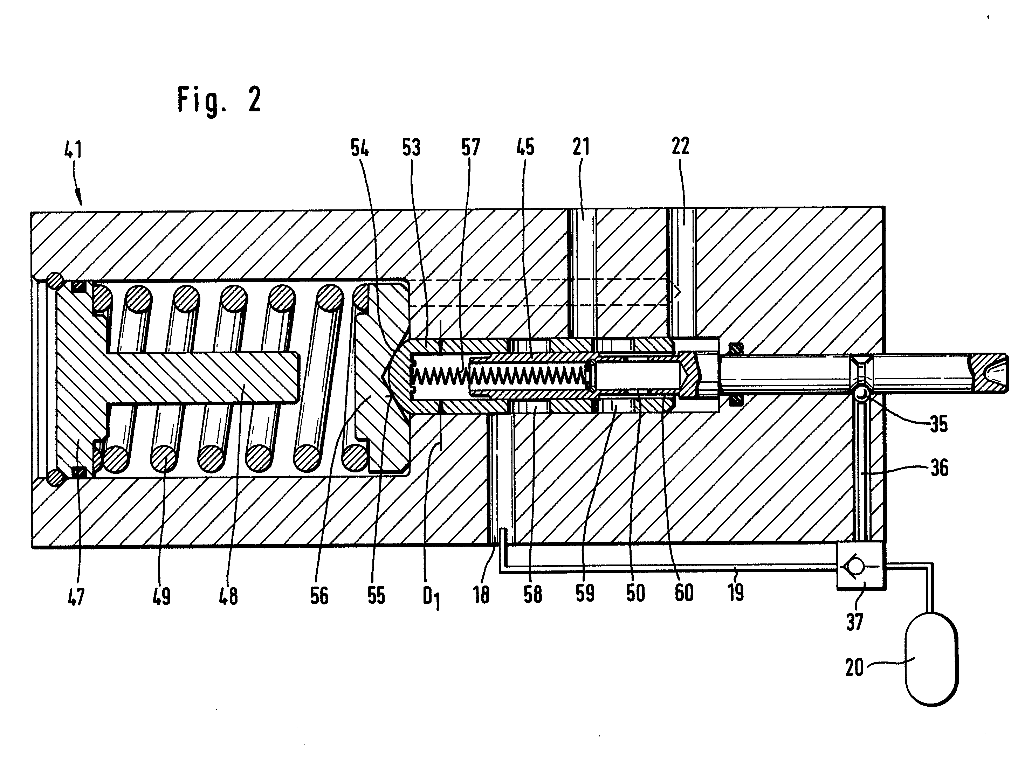

Bei dem in Fig. 2 dargestellten weiteren Bremsregelventil 41 für eine Einkreis-Bremsanlage ist eine Hülse 53 vorgesehen, deren der Betätigungsseite abgewandtes Ende geschlossen ist und die mit ihrer gekrümmten Stirnfläche 54 an einer kegelförmigen Anlagefläche 55 eines Federtellers 56 anliegt. Eine Feder 49, die zwischen dem Federteller 56 und einem Stopfen 47, der eine die Feder 49 und den Federteller 56 aufnehmende Bohrung verschließt, angeordnet ist, wirkt somit über den Federteller 56 gegen die Hülse 53 und drückt diese in ihre Ausgangsstellung. Eine weitere Feder 57 stützt sich einerseits am Boden der Hülse 53 und andererseits am Ventilschieber 45 ab. Bei dieser Ausführungsform sind nur zwei Paare radialer Bohrungen 58, 59 in der Hülse 53 vorgesehen. Eine Steuerkanten bildende Ringnut 60 ist im Bereich der Bohrung 50 des Ventilschiebers 45 ausgebildet. Im dargestellten Ausgangszustand ist die Bohrung 58 vom Steuerschieber 45 verschlossen, so daß die Verbindung zur Leitung 19 unterbrochen ist. Der Anschluß 21 ist über die Bohrung 59, die Ringnut 60, mit einem hinter dem Steuerschieber 45 ausgebildeten Ringraum in Verbindung, der seinerseits immer mit dem zum drucklosen Behälter führenden Anschluß 22 verbunden ist. Bei Betätigung des Bremsregelventils wird der Steuerschieber 45 (in der Zeichnung nach links) verschoben, so daß zunächst zu dem Behälter führende Verbindung unterbrochen wird. Bei dieser Bewegung wird auch das Ventil 37 geöffnet, so daß der Versorgungsdruck am Druckmittelanschluß 18 ansteht. Wird nun bei weiterer Verschiebung des Steuerschiebers die Verbindung zum Druckmittelanschluß 18 geöffnet, so kann sich über die Bohrung 58, die Ringnut 60 und die Bohrung 50 ein Druck im Innenraum des Steuerschiebers 45 aufbauen. Da der Ringraum hinter dem Steuerschieber 45 stets mit dem drucklosen Behälter verbunden ist, entspricht die wirksame vom Druck beaufschlagte Fläche bei dieser Ausführung dem Bohrungsdurchmesser $D_1$ der Hülse 53.

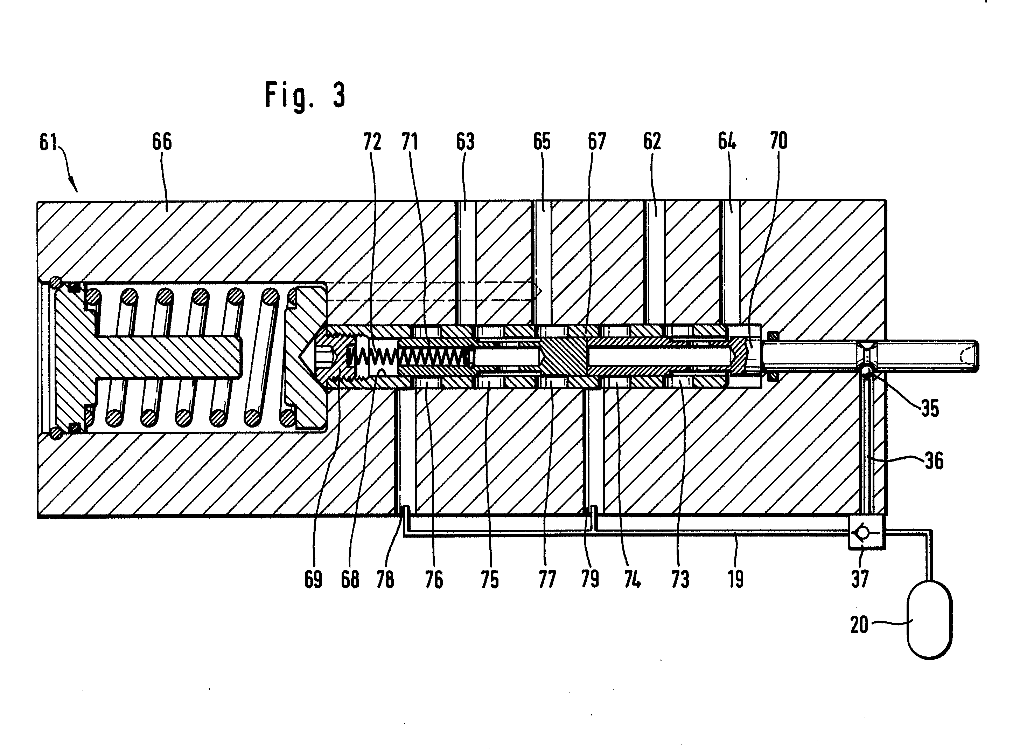

Fig. 3 zeigt ein Bremsregelventil 61 für eine Zweikreisbremsanlage. Bei diesem Bremsregelventil 61 sind für die beiden Bremskreise entsprechende Anschlüsse 62, 63, zwei zu einem (nicht dargestellten) drucklosen Behälter führende Anschlüsse 64, 65 und Druckmittelanschlüsse 78, 79 in einem Ventilgehäuse 66 vorgesehen.

Eine im Ventilgehäuse 66 axial verschiebbar gelagerte Hülse 67 weist eine durchgehende Bohrung 68 auf, deren der Betätigungsseite abgewandtes Ende mittels eines eingeschraubten Stopfens 69 verschlossen ist. In der Bohrung 68 ist ein erster, einer Druckstange zugeordneter bzw. einstückig mit dieser ausgebildeter Ventilschieber 70 axial verschiebbar angeordnet, der den Anschlüssen 62, 79 für den ersten Bremskreis zugeordnet ist und deren Aufbau im wesentlichen dem des Ventilschiebers 45 des in Fig. 2 dargestellten Ausführungsbeispiels entspricht. Anschließend an den ersten Ventilschieber 70 ist ein zweiter Ventilschieber 71 angeordnet, der den Anschlüssen 63, 78 für den zweiten Bremskreis zugeordnet ist und an dem sich eine Feder 72 abstützt, deren anderes Ende am Stopfen 69 anliegt. Entsprechend den Anschlüssen 62, 63, 78 und 79 weist die Hülse radiale Bohrungen 73, 74, 75, 76 und 77 auf, die den jeweiligen Anschlüssen zugeordnet sind. Die Anordnung des Federtellers und der gegen diesen wirkenden Druckfeder erfolgt analog zum Ausführungsbeispiel gemäß Fig. 2. Die Arbeitsweise des Bremsregelventils 61 ist analog der des in Fig. 2 dargestellten Bremsregelventils 41.

Die Betätigung des zweiten Ventilschiebers 71 erfolgt dabei ausgehend von der Ausgangsstellung zunächst durch Einsetzung des Fremddruckes über dem ersten Ventilschieber 70. Der über den Druckanschluß 79 eingesteuerte Druck wirkt auf der Rückseite des zweiten Ventilschiebers 71, so daß auch dieser sich in Öffnungsrichtung bewegt und nach Abschluß der Verbindung zum drucklosen Behälter die Verbindung zum Druckmittelanschluß 78 öffnet, so daß auch der zweite Bremskreis mit Druck versorgt wird. Bei Ausfall des Fremddruckes bzw. bei Kreisausfall erfolgt die Betätigung durch mechanische Anlage des ersten Ventilschiebers 70 am zweiten Ventilschieber 71.

0205938

Bezugszeichenliste:

| | | | |
|---|---|---|---|
| 1 | Bremsregelventil | 31 | Stirnfläche |
| 2 | Ventilgehäuse | 32 | Druckraum |
| 3 | Ventilbohrung | 33 | Stufe |
| 4 | Abschnitt | 34 | Ringnut |
| 5 | Ventilschieber | 35 | Kugel |
| 6 | Abschnitt | 36 | Stift |
| 7 | Stopfen | 37 | Rückschlagventil |
| 8 | Führungsbohrung | 38 | Ausnehmung |
| 9 | Feder | 41 | Bremsregelventil |
| 10 | Bohrung | 45 | Ventilschieber |
| 11 | Abschnitt | 47 | Stopfen |
| 12 | Ringraum | 48 | Anschlagzapfen |
| 13 | Hülse | 49 | Feder |
| 14 | Abschnitt | 50 | Bohrung |
| 15 | Flanschabschnitt | 53 | Hülse |
| 16 | Stufe | 54 | Stirnfläche |
| 17 | Feder | 55 | Anlagefläche |
| 18 | Druckmittelanschluß | 56 | Federteller |
| 19 | Leitung | 57 | Feder |
| 20 | Fremdkraft-Druckmittelquelle | 58 | Bohrung |
| 21 | Anschluß | 59 | Bohrung |
| 22 | Anschluß | 60 | Ringnut |
| 23 | Anschluß | 61 | Bremsregelventil |
| 24 | Bohrung | 62 | Anschluß |
| 25 | Bohrung | 63 | Anschluß |
| 26 | Bohrung | 64 | Anschluß |
| 27 | Bohrung | 65 | Anschluß |
| 28 | Ringnut | 66 | Ventilgehäuse |
| 29 | Bohrung | 67 | Hülse |

$-12-$

| 68 | Bohrung |
|----|---------|
| 69 | Stopfen |
| 70 | Ventilschieber |
| 71 | Ventilschieber |
| 72 | Feder |
| 73 | Bohrung |
| 74 | Bohrung |
| 75 | Bohrung |
| 76 | Bohrung |
| 77 | Bohrung |
| 78 | Druckmittelanschluß |
| 79 | Druckmittelanschluß |

ALFRED TEVES GMBH

Frankfurt am Main

0205938

18.6.1985

EP 5795

Dr. M. Kahrs - 20

L. Kunze - 10

- 1 -

**Bremsregelventil für hydraulische Fremdkraft-Bremsanlagen, insbesondere für Kraftfahrzeuge und selbstfahrende Arbeitsmaschinen**

Patentansprüche:

1. Bremsregelventil für hydraulische Fremdkraft-Bremsanlagen, insbesondere für Kraftfahrzeuge und selbstfahrende Arbeitsmaschinen, mit einem Ventilgehäuse mit einem Druckmittelanschluß, der mit einer Fremdkraft-Druckmittelquelle verbindbar ist, zumindest einem Anschluß, der mit einer Radbremse verbindbar ist, einem mit einem drucklosen Behälter verbindbaren Anschluß und mit einem in einer Bohrung des Ventilgehäuses axial verschiebbar angeordneten Ventilschieber, welcher einen Durchgang aufweist, um den Druckmittelanschluß mit dem zur Radbremse führenden Anschluß zu verbinden, dadurch gekennzeichnet, daß im Ventilgehäuse (2) ein axial verschiebbares Element (13, 53, 67) angeordnet ist, das einerseits von der Kraft einer Feder (17, 49) und andererseits vom Bremsdruck beaufschlagbar ist, und daß das axial verschiebbare Element (13, 53, 67) zumindest je einen Durchgang (24, 25, 26; 58, 59; 73, 74, 75, 76, 77) aufweist, mittels der die Anschlüsse (18, 21, 22; 78, 79, 62, 63, 64, 65) mit dem Ventildurchgang (27, 50) verbindbar sind.

2. Bremsregelventil nach Anspruch 1, dadurch gekennzeichnet, daß das axial verschiebbare Element (13, 53, 67) eine den Ventilschieber (5; 45; 70, 71) umgebende Hülse ist.

3. Bremsregelventil nach Anspruch 2, dadurch gekennzeichnet, daß die Hülse (13) einen Flanschabschnitt (15) aufweist, der einerseits gegen einen am Ventilgehäuse (2) vorgesehenen Anschlag anlegbar ist und andererseits zur Abstützung der Feder (17) dient.

4. Bremsregelventil nach einem der vorhergehenden Ansprüche, dadurch gekennzeichnet, daß der Ventilschieber (5) einen mit dem Durchgang (27) in Verbindung stehenden Kanal (10, 29) aufweist, der zu einem von einer Fläche (31) des axial verschiebbaren Elements (13) begrenzten Druckraum (32) führt.

5. Bremsregelventil nach einem der vorhergehenden Ansprüche, dadurch gekennzeichnet, daß ein Ende des Ventilschiebers (5) in einem einen Verschluß bildenden Stopfen (7) angeordnet bzw. geführt ist.

6. Bremsregelventil nach einem der vorgehenden Ansprüche, dadurch gekennzeichnet, daß zwischen der Fremdkraft-Druckmittelquelle (20) und dem Druckmittelanschluß (18) ein mechanisch entsperrbares Rückschlagventil (37) angeordnet ist.

7. Bremsregelventil nach Anspruch 6, dadurch gekennzeichnet, daß am Ventilschieber (5) bzw. einem diesen betätigenden Betätigungsglied mechanische Mittel zur Entsperrung des Rückschlagventils (37) vorgesehen sind.

8. Bremsregelventil nach Ansprch 7, dadurch gekennzeichnet, daß die mechanischen Mittel eine Kugelrampeneinrichtung (34, 35, 36) aufweisen.

ALFRED TEVES GMBH  EP 5795

- 3 -

9. Bremsregelventil nach Anspruch 2, dadurch gekennzeichnet, daß die Hülse (53) einseitig verschlossen ist.

10. Bremsregelventil nach Anspruch 9, dadurch gekennzeichnet, daß die Hülse (53) einen Ringraum begrenzt, der einen immer offenen, zu einem drucklosen Behälter führenden Anschluß aufweist.

11. Bremsregelventil nach Anspruch 9 oder 10, dadurch gekennzeichnet, daß ein separater Federteller (56) vorgesehen ist, der an der Stirnseite (54) der Hülse (53) anliegt und an den sich die Feder (49) abstützt.

12. Bremsregelventil für eine hydraulische Zweikreis-Bremsanlage, nach einem der vorhergehenden Ansprüche, dadurch gekennzeichnet, daß vor dem Ventilschieber (70) ein weiterer Ventilschieber (71) vorgesehen ist und beide Ventilschieber gemeinsamen in einer Hülse (67) angeordnet sind.

13. Bremsregelventil nach einem der Ansprüche 9 bis 12, dadurch gekennzeichnet, daß zum Verschluß der Hülse (67) ein Stopfen (69) vorgesehen ist.

Fig. 1

0205938

Fig. 2

# Fig. 3

# Europäisches Patentamt

# EUROPÄISCHER RECHERCHENBERICHT

EP  86 10 6988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 105 788  (OPEL)<br>* Seite 10, Zeile 15 - Seite  15, Zeile 5; Figuren 1-6 * | 1,2 | B 60 T   13/14 |
| | --- | | |
| A | CH-A-  158 691  (VAGO) | | |
| | --- | | |
| A | GB-A-2 073 346  (NISSAN) | | |
| | ----- | | |

|  |
|---|
| RECHERCHIERTE SACHGEBIETE (Int. Cl.4) |
| B 60 T   13/12<br>B 60 T   13/14<br>F 15 B   13/12<br>F 15 B   13/14 |

Der vorliegende Recherchenbericht wurde für alle Patentansprüche erstellt.

| Recherchenort | Abschlußdatum der Recherche | Prüfer |
|---|---|---|
| DEN HAAG | 03-10-1986 | HARTEVELD C.D.H. |